# EUROPÄISCHE PATENTANMELDUNG

(11) **EP 4 840 377 A1**
(43) Veröffentlichungstag der Anmeldung: **18.11.2026**
(21) Anmeldenummer: 26178040.7
(22) Anmeldetag: 11.05.2026
(51) Int. Cl.: A47J 42/14, A47J 42/04, A47J 43/25

(54) **ZERKLEINERER FÜR LEBENSMITTEL**

(30) Priorität: 12.05.2025 AT 601102025
(71) Anmelder: Herkner, Florian, 1180 Wien (AT)
(72) Erfinder: Herkner, Florian, 1180 Wien (AT)
(74) Vertreter: Schwarz & Partner Patentanwälte GmbH

(57) **Zusammenfassung**

Die Erfindung betrifft einen Zerkleinerer (100, 200) für Lebensmittel, wobei der Zerkleinerer (100) eine Presseinheit (1), eine Mahleinheit (2) und eine Ladetrommel (3) umfasst, wobei die Ladetrommel (3) einen inneren Laderaum (6) und im oberen Bereich ein Gewinde (5b) aufweist, über welches die Ladetrommel (3) mit der Presseinheit (1) verbunden ist, wobei die Mahleinheit (2) eine Mahlscheibe (4) mit Mahlklingen und einen nach oben offenen Zylinder aufweist, wobei die Mahleinheit (2) am unteren Ende der Ladetrommel (3) installiert ist, wobei die Presseinheit (1) im inneren Laderaum (6) der Ladetrommel (3) nach oben und unten beweglich und seitlich durch die Wand des Laderaums (6) geführt ist, wobei die Mahleinheit (2) mittels einer Arretierung (7) an der Ladetrommel (3) befestigt ist, in welcher die Mahleinheit (2) gegen ein Abrutschen nach unten gesichert und frei drehbar ist.

## Beschreibung

Die Erfindung betrifft einen Zerkleinerer für Lebensmittel, wobei der Zerkleinerer eine Ladetrommel, eine Mahleinheit und eine Presseinheit umfasst, wobei die Ladetrommel einen inneren Laderaum und im oberen Bereich ein Gewinde aufweist, über welches die Ladetrommel mit der Presseinheit verbunden ist, wobei die Mahleinheit eine Mahlscheibe mit Mahlklingen und einen nach oben offenen Zylinder aufweist, wobei die Mahleinheit am unteren Ende der Ladetrommel installiert ist, wobei die Presseinheit im inneren Laderaum der Ladetrommel nach oben und unten beweglich und seitlich durch die Wand des Laderaums geführt ist.

Insbesondere betrifft die Erfindung einen Zerkleinerer für Mahlgut wie Staubzucker Hartkäse, Gewürze, Schokolade oder dergleichen. Von bekannten Mühlen oder Reiben für Staubzucker oder Käse und andere lose Lebensmittel ist bekannt, dass das Heranführen des Mahlgutes nicht in einer einfachen zweckmäßigen Art durchgeführt werden kann.

Dadurch kommt es zu mangelhaften Ausbeuten bei verklumptem Zucker wie Staubkäse oder bei Hartkäse. Da die verfügbaren Spender bzw. die verfügbaren Staubzuckerspender (die ein Sieb mit einem Rotor umfassen, der mittels verschiedener Mechanismen betrieben wird) bei Verklumpungen nur sehr eingeschränkt funktionieren, wird diese Wirkungsweise außer Betracht gelassen und der Fokus auf eine Vermahlung gelegt.

Da aber die Drehung der Mahleinheit nicht unabhängig von der Drehung des Pressstempels ist, können lose Produkte (ungleich ganzen Produkten wie z.B. Ingwerknollen) nicht zweckmäßig an die Mahlscheibe herangedrückt werden.

Beispielsweise wird auf die KR 20160080149 A verwiesen, in welcher ein Zerkleinerer für feste Nahrungsmittel wie Knoblauch oder Ingwer offenbart ist. Hier wird eine Mahleinheit über ein Gewinde fest und drehsicher mit einer Ladetrommel verbunden. Ein Pressstempel wird in die Ladetrommel eingeführt und kann über eine Drehbewegung an die Lebensmittel herangeführt werden. Dies funktioniert zwar bei ganzen Produkten wie Knoblauch oder Ingwer, jedoch nicht bei losen Produkten wie Zucker, insbesondere Staubzucker, oder Käse wie Hartkäse.

Aus den Druckschriften US 2015144719 A1, US 2005160894 A1, DE 102006033216 A1 und CN 111434295 A sind weitere Zerkleinerer bekannt, deren Bauweise jedoch komplex und aufwändig ist und die keine einfache Reinigung zulassen.

Weiterer Stand der Technik wird durch die Schriften EP 2082673 B1, EP 2180813 B1, EP 2002771 A1, IT CZ20090022 A1, US 7648088 B2, DE 102009042499 B4, US 6412717 B1, EP 3237157 B1 und DE 20117358 U1 gebildet.

Es ist die Aufgabe der vorliegenden Erfindung, einen Zerkleinerer für Lebensmittel bereitzustellen, der die genannten Nachteile überwindet und sich insbesondere für lose Lebensmittel eignet und sich durch eine einfache Bauweise auszeichnet.

Diese Aufgabe wird gelöst durch einen Zerkleinerer für Lebensmittel, wobei der Zerkleinerer eine Ladetrommel, eine Mahleinheit und eine Presseinheit umfasst, wobei die Ladetrommel einen inneren Laderaum und im oberen Bereich ein Gewinde aufweist, über welches die Ladetrommel mit der Presseinheit verbunden ist, wobei die Mahleinheit eine Mahlscheibe mit Mahlklingen und einen nach oben offenen Zylinder aufweist, wobei die Mahleinheit am unteren Ende der Ladetrommel installiert ist, wobei die Presseinheit im inneren Laderaum der Ladetrommel nach oben und unten beweglich und seitlich durch die Wand des Laderaums geführt ist, wobei die Mahleinheit mittels einer Arretierung an der Ladetrommel befestigt ist, in welcher die Mahleinheit gegen ein Abrutschen nach unten gesichert und frei drehbar ist, d.h. ohne axialen Vorschub drehbar ist, wobei der Zerkleinerer ferner eine Dichtung umfasst, welche dazu ausgebildet ist, einen Spalt zwischen der Innenwand der Ladetrommel und dem Pressstempel abzudichten.

Gemäß der vorliegenden Erfindung sind die Mahleinheit und der Laderaum derart voneinander entkoppelt, dass die Mahleinheit gegenüber dem Laderaum frei drehbar ist. Damit kann der Zerkleinerer insbesondere zwei Betriebsfunktionen implementieren, und zwar erstens eine Mahlfunktion und zweitens eine Vorschubfunktion.

In der Mahlfunktion liegt der Laderaum drehfest zur Presseinheit vor (d.h. der Laderaum und die Presseinheit rotieren mit derselben Winkelgeschwindigkeit oder stehen beide still) und die Mahleinheit wird bezüglich des Laderaums rotiert. Hier wird der Laderaum dasselbe Volumen aufweisen und die Rotation der Mahleinheit bezüglich des Laderaums dient dazu, das im Laderaum befindliche Lebensmittel mit im Wesentlichen gleichbleibendem Druck zu mahlen, was insbesondere für lose Lebensmittel wie Zucker, insbesondere Staubzucker, oder Käse, insbesondere wie Parmesan oder anderer Hartkäse, vorteilhaft ist.

In der Vorschubfunktion liegt der Laderaum drehfest zur Mahleinheit vor (d.h. der Laderaum und die Mahleinheit rotieren mit derselben Winkelgeschwindigkeit oder stehen beide still) und die Presseinheit wird bezüglich des Laderaums rotiert. Der Zerkleinerer kann automatisch in die Vorschubfunktion wechseln, wenn aufgrund des fehlenden Widerstands des Mahlguts der Drehwiderstand der Presseinheit so gering wird, dass die Presseinheit automatisch nachrückt. Die Vorschubfunktion kann beispielsweise aber auch gezielt aktiviert werden, indem das freie Drehen der Mahleinheit bezüglich des Laderaums manuell unterbunden wird. Durch die Vorschubfunktion kann gewährleistet werden, dass das Volumen des Laderaums in einem gewünschten Maß reduziert werden kann und das Mahlgut somit immer mit ausreichendem Druck und Volumen an die Mahlscheibe herangeführt werden kann.

Im Betrieb kann es selbstverständlich auch dazu kommen, dass die Vorschubfunktion und die Mahlfunktion gleichzeitig stattfinden, d.h. die Presseinheit wird bezüglich des Laderaums rotiert und gleichzeitig wird die Mahleinheit bezüglich des Laderaums rotiert. Diese Rotationen können insbesondere mit unterschiedlichen Winkelgeschwindigkeiten stattfinden.

Um den Zerkleinerer zu bedienen, kann die Mahleinheit mit einer Hand ergriffen werden (z.B. mit der linken Hand) und die Presseinheit kann mit der anderen Hand ergriffen werden (z.B. mit der rechten Hand). Im Vorschubmodus wird die Presseinheit so lange bezüglich der Ladetrommel gedreht, dass die Ladetrommel bzw. ein Ladestempel der Ladetrommel den Laderaum auf ein gewünschtes Volumen bringt. Hierfür kann optional der Daumen der linken Hand, die die Mahleinheit festhält, auf die Ladetrommel gelegt werden, sodass die Mahleinheit nicht bezüglich der Ladetrommel rotiert, wodurch der Zerkleinerer in den Vorschubmodus gebracht wird. Die Rotation der Mahleinheit bezüglich der Ladetrommel kann auch anders unterbunden werden, um den Vorschubmodus zu aktivieren, z.B. indem die Mahleinheit in axialer Richtung stärker an die Ladetrommel gedrückt wird, um eine Reibkraft zwischen der Mahleinheit und der Ladetrommel zu erhöhen, und dadurch eine Relativbewegung der Mahleinheit zur Ladetrommel unterbunden bzw. erschwert wird.

Danach wird der Zerkleinerer in der Mahlfunktion bedient, indem die Mahleinheit bezüglich der Ladetrommel frei gedreht wird. Hierbei befindet sich das Mahlgut im Laderaum, ohne dass das Volumen des Laderaums verändert wird, und die Mahlscheibe mit dem Mahlklingen trägt das Mahlgut ab, sodass das Mahlgut gerieben aus dem Zerkleinerer ausgeben wird. Wenn mehr Druck auf das Mahlgut ausgeübt werden soll, kann der Zerkleinerer wieder in der Vorschubfunktion bedient werden, um den Laderaum zu verkleinern, und danach in der Mahlfunktion bedient werden, um das Mahlgut zu mahlen. Der Wechsel von der Vorschubfunktion in die Mahlfunktion kann auch automatisch erfolgen, wenn die Rotationswiderstände der Mahleinheit zur Ladetrommel bzw. der Presseinheit zur Ladetrommel entsprechend eingestellt werden und der Zerkleinerer somit automatisch in die Vorschubfunktion wechselt, wenn das Mahlgut im Laderaum nicht unter Druck steht, d.h. wenig Rotationswiderstand an der Presseinheit zur Ladetrommel vorliegt.

Die genannte Dichtung kann dabei insbesondere den Effekt haben, dass kein Mahlgut in den Bereich der Gewinde kommt. Die Dichtung kann auf unterschiedlichste Arten ausgeführt werden, beispielsweise als separates Dichtelement und/oder durch eine abdichtende Ausgestaltung wenigstens einer der einander zugewandten zylindrischen Flächen. Beispielsweise kann die Dichtung als Dichtring, insbesondere O-Ring, als Lippendichtung, Dichtmanschette, Dichtungshülse, Dichtband, Dichtmasse, quellfähiges Dichtelement oder durch einen radial verpressten Abschnitt des Rohres und/oder des darin angeordneten Elements ausgebildet sein. In wieder anderen Ausführungsfällen könnte die Dichtung auch entfallen.

Besonders bevorzugt weist die Ladetrommel das Gewinde an einer Außenseite auf, wobei die Presseinheit einen Pressstempel und eine Hülse aufweist, wobei der Pressstempel in die Ladetrommel eingeschobenen ist und die Hülse an ihrer Innenseite ein Gewinde aufweist, welches mit dem Gewinde an der Außenseite der Ladetrommel verbunden ist. Durch diese Lösung kann die Presseinheit eine möglichst große Grifffläche bieten, da die Hülse an ihrer gesamten Außenseite frei von technisch funktionalen Elementen ist und nur an ihrer Innenseite ein Gewinde ausweist, das mit dem Außengewinde der Ladetrommel zusammenwirkt. Überdies kann die Presseinheit mit einer geringeren Höhe ausgeführt werden, als dies der Fall wäre, wenn der Pressstempel nur im Inneren der Ladetrommel geführt wird, da kein Griffelement an der Oberseite des Presselements vorgesehen werden muss, wie dies z.B. bei dem Zerkleinerer der KR 20160080149 A der Fall ist.

In der vorgenannten Ausführungsform kann die Hülse einen Innendurchmesser aufweisen, der größer als der Außendurchmesser des Presstempels ist, um die Ladetrommel zwischen Hülse und Pressstempel aufzunehmen, wobei weiters am oberen Ende des Pressstempels eine Verbindungsscheibe vorgesehen ist, welche denselben Außendurchmesser wie die Hülse aufweist und wobei die Hülse, die Verbindungsscheibe und der Pressstempel starr miteinander verbunden sind. Durch diese Konstruktion kann die Presseinheit insbesondere auch mehrteilig ausgeführt werden, um eine einfachere Fertigung zu erzielen. Insbesondere könnten alle drei der genannten Bauteile gesondert gefertigt und danach lösbar oder unlösbar verbunden werden. Alternativ könnte die Verbindungsscheibe einstückig mit einem der anderen Bauteile gefertigt sein und das dritte Bauteil könnte lösbar oder unlösbar mit der Verbindungsscheibe verbunden werden. In wieder einer anderen Variante könnte die Presseinheit insgesamt einstückig gefertigt sein.

Die genannte Arretierung sorgt wie bereits einleitend erklärt dafür, dass die Mahleinheit einerseits gegen ein Abrutschen nach unten gesichert ist und andererseits dafür, dass die Mahleinheit bezüglich der Ladetrommel frei drehbar ist, d.h. ohne axialen Vorschub drehbar ist. Die Arretierung kann beispielsweise durch eine ringförmige Ausnehmung auf der Innenseite der Mahleinheit und eine ringförmige Auskragung auf der Außenseite der Ladetrommel gebildet sein. Alternativ könnte die Arretierung durch eine ringförmige Auskragung auf der Innenseite der Mahleinheit und ringförmige Ausnehmung auf der Außenseite der Ladetrommel gebildet sein. Unter "ringförmig" wird hierin auch verstanden, dass der Ring an einer, zwei oder mehr als zwei Stellen durchbrochen sein kann.

Besonders bevorzugt kann die ringförmige Auskragung durch einen konischen ringförmigen Widerhaken gebildet sein. Dies hilft dabei, die Mahleinheit auf die Ladeeinheit aufzuschieben. Die Ausnehmung kann eine gegengleiche Konizität aufweisen, um den Widerhaken passgenau aufzunehmen. Unter einem Widerhaken wird beispielsweise eine Form mit stetig wachsendem Durchmesser verstanden und sich an der Stelle des größten Durchmessers ein unstetiger Übergang zu einem kleineren bzw. dem kleinsten Durchmesser befindet.

Weiters bevorzugt ist die Mahlscheibe auswechselbar in der Mahleinheit vorgesehen, und kann bevorzugt durch eine andere Mahlscheibe ausgewechselt werden. Dadurch wird ermöglicht, dass die Mahlscheibe entweder an ein anderes Mahlgut angepasst werden kann, sodass der Zerkleinerer mit einer ersten Mahlscheibe beispielsweise zuerst für Stabzucker eingesetzt werden kann und danach beispielsweise mit einer zweiten Mahlscheibe für Parmesan eingesetzt werden kann. Es ist ersichtlich, dass derselbe Zerkleinerer für unterschiedliche Mahlgüter eingesetzt werden kann.

Insbesondere kann die Mahlscheibe auch Mahlklingen aufweisen, welche derart ausgerichtet sind, dass diese ihre Funktionalität in gegenläufiger Drehrichtung zum Gewinde erreichen. Dies bedeutet, dass bei einem Versetzen des Pressstempels nach unten durch Drehung der Mahleinheit auch eine Mahlfunktion erzielt werden kann, ohne dass die Drehrichtung der Mahleinrichtung gewechselt werden müsste.

In einer besonders bevorzugten Ausführungsform kann der Zerkleinerer weiters eine Arretiersicherung umfassen, welche drehfest an der Ladetrommel montiert ist und in radialer Richtung unmittelbar über zumindest einem Abschnitt der Mahleinheit liegt. In anderen Worten umgreift die Arretiersicherung einen oberen Abschnitt der Mahleinheit, sodass sich die Arretierung der Mahleinheit nicht unabsichtlich lösen kann. Die Arretiersicherung ist beispielsweise eine ringförmige Schelle. Die Arretiersicherung ermöglicht einerseits, dass sie die Mahleinheit in radialer Richtung überlappen kann, um ein Lösen der Arretierung zu verhindern. Weiters kann die Arretiersicherung dem Benutzer ermöglichen, die Mahleinheit einfach gegenüber der Ladetrommel zu arretieren, indem diese gemeinsam die Griffeinheit und die Mahleinheit gemeinsam ergriffen und bezüglich der Presseinheit gedreht werden.

Weiters bevorzugt die weist die Mahleinheit einen oberen Abschnitt auf, an welchem eine ringförmige Ausnehmung oder eine ringförmige Auskragung der Arretierung vorliegt, wobei der obere Abschnitt zumindest eine Durchbrechung, besonders bevorzugt genau zwei Durchbrechungen, aufweist. Dadurch wir dieser Bereich der Arretierung flexibel ausgestaltet und der Zerkleinerer kann somit leichter zusammengesetzt werden. Diese Ausführungsform kann besonders bevorzugt mit der obigen Ausführungsform kombiniert werden, sodass die Arretiersicherung diesen oberen, flexiblen Bereich überdeckt und ein ungewolltes Lösen der Arretierung verhindert.

Um die vorliegende Erfindung besser zu verstehen, werden im Folgenden die beigefügten Figuren näher beschrieben. Diese Figuren veranschaulichen beispielhafte Ausführungsformen des erfindungsgemäßen Zerkleinerers und zeigen die wesentlichen Merkmale und Komponenten, die zur Erreichung der angestrebten Vorteile beitragen. Die nachfolgenden Figuren sollen die Beschreibung der Erfindung ergänzen und das Verständnis der technischen Details und der Funktionsweise erleichtern.
Figur 1 zeigt eine erste Ausführungsform eines erfindungsgemäßen Zerkleinerers in einem zusammengesetzten Zustand.
Figur 2 zeigt den Zerkleinerer von Figur 1 in einem auseinandergenommenen Zustand.
Figur 3 zeigt eine Schnittansicht des Zerkleinerers von Figur 1.
Figur 4 zeigt eine zweite Ausführungsform eines erfindungsgemäßen Zerkleinerers in einem zusammengesetzten Zustand.
Figur 5 zeigt den Zerkleinerer von Figur 5 in einem auseinandergenommenen Zustand in einer perspektivischen Ansicht.
Figur 6 zeigt den Zerkleinerer von Figur 5 in einem auseinandergenommenen Zustand in einer Seitenansicht.

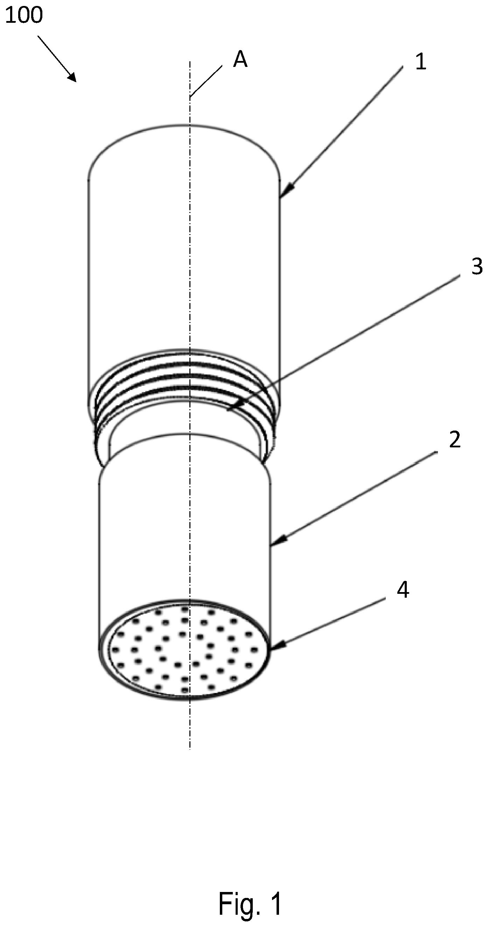

Die Figuren 1 bis 3 zeigen einen Zerkleinerer 100, der eine Presseinheit 1, eine Mahleinheit 2 mit einer Mahlscheibe 4 und eine Ladetrommel 3 umfasst. Im zusammengesetzten Zustand des Zerkleinerers 100, der in Figur 1 dargestellt ist, liegen diese Bauteile in axialer Richtung von oben nach unten betrachtet wie folgt vor: Presseinheit 1, Ladetrommel 3, Mahleinheit 2 und Mahlscheibe 4, wobei sich die Bauteile in radialer Richtung auch teilweise überlappen. Es sei hervorgehoben, dass die Begriffe "oben", "unten", "seitlich" und Abwandlungen dieser Begriffe im bestimmungsgemäßen Gebrauch des Zerkleinerers 100 zu lesen sind, bei dem die Mahlscheibe 4 unten angeordnet ist.

Der Zerkleinerer 100 weist eine Achse A auf, um welche der Zerkleinerer 100 im Wesentlichen rotationssymmetrisch ausgeführt ist, mit der Ausnahme von Gewinden, Klingen und anderen Elementen. Wenn hierin davon gesprochen werden, dass zwei Bauteile gegeneinander rotieren, wird hierin verstanden, dass sie um die Achse A rotieren. Auch die Begriffe "axial" und "radial" werden bezüglich dieser Achse A verstanden.

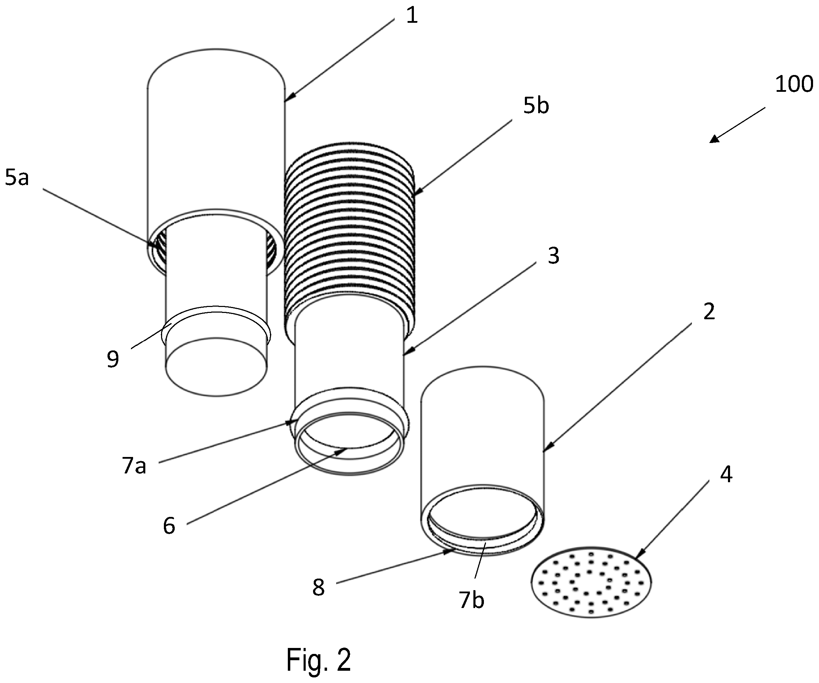

Die Ladetrommel 3 ist im Wesentlichen als Hohlkörper aufgebaut, sodass er Seitenwände für einen Laderaum 6 definiert, siehe insbesondere Figur 2. Um dem Laderaum 6 von oben zu begrenzen, wird ein Pressstempel 1a der Presseinheit 1 von oben in den Hohlraum der Ladetrommel 3 eingeführt. Von unten wird der Laderaum 6 durch die Mahlscheibe 4 der Mahleinheit 2 begrenzt.

Um das Volumen des Laderaums 6 einzustellen, kann der Pressstempel 1a bezüglich der Ladetrommel 3 entlang der Achse A versetzt werden, d.h. nach oben, um den Laderaum 6 zu vergrößern, und nach unten, um den Laderaum 6 zu verkleinern. Um das Volumen des Laderaums 6 kontrolliert zu verändern, weist die Ladetrommel 3 ein Gewinde 5b auf und die Presseinheit 1 weist ein gegengleiches Gewinde 5a auf. Das Gewinde 5a der Presseinheit 1 steht mit dem Gewinde 5b der Ladetrommel 3 im Eingriff, sodass eine Rotation der Presseinheit 1 bezüglich der Ladetrommel 3 auch eine axiale Relativbewegung der Presseinheit 1 bezüglich der Ladetrommel 3 bewirkt. In anderen Worten kann der Laderaum 6 durch Drehen der Presseinheit 1 gegenüber der Ladetrommel 3 verkleinert und vergrößert werden.

In den dargestellten Varianten weist die Ladetrommel 3 das Gewinde 5b auf der Außenseite auf und die Presseinheit 1 weist einen gewindelosen Presstempel 1a auf, der über eine Verbindungsscheibe 1b mit einer Hülse 1c verbunden ist. Die Hülse 1c ist ein rohrförmiger Körper weist auf ihrer Innenseite das Gewinde 5a auf, wobei ein Innenraum zwischen der Innenseite der Hülse 1c und dem Presstempel 1a vorliegt, um einen oberen Abschnitt der rohrförmigen Ladetrommel 3, der das Gewinde 5b aufweist, in diesem Innenraum aufzunehmen. Die Außenseite der Hülse 1c bildet somit eine Grifffläche für einen Benutzer, um die Presseinheit 1 zu drehen. Es sei jedoch angemerkt, dass die Presseinheit 1 auch ein zylindrischer Körper sein könnte, der in einem unteren und/oder mittleren Abschnitt den Presstempel mit einem Außengewinde aufweist und in einem oberen Abschnitt ein Griffstück aufweisen könnte. Das Außengewinde des Pressstempels 1a würde in diesem Fall in eine Innengewinde der Ladetrommel 3 eingreifen.

Wie in Figur 2 dargestellt kann der Zerkleinerer 100 optional eine Dichtung 9 aufweisen, welche auf dem Pressstempel 1a angeordnet sein kann und den Spalt zwischen der Innenwand der Ladetrommel 3 und dem Pressstempel 1a abdichtet. Die Dichtung kann insbesondere durch einen Dichtring verwirklicht sein, der auf eine ringförmige Rille am Pressstempel 1a aufgeschoben ist.

Die Mahleinheit 2 ist derart mit der Ladetrommel 3 verbunden, dass sie frei drehbar ist, d.h. wenn die Mahleinheit 2 bezüglich der Ladetrommel 3 gedreht wird, bewegt sich die Mahleinheit 2 in axialer Richtung nicht bezüglich der Ladetrommel 3. Um dies umzusetzen, wird eine Arretierung 7 eingesetzt, wobei sich das Arretieren auf ein Versetzen der Mahleinheit 2 in axialer Richtung bezieht und die freie Drehbarkeit um die Achse A weiterhin ermöglicht wird.

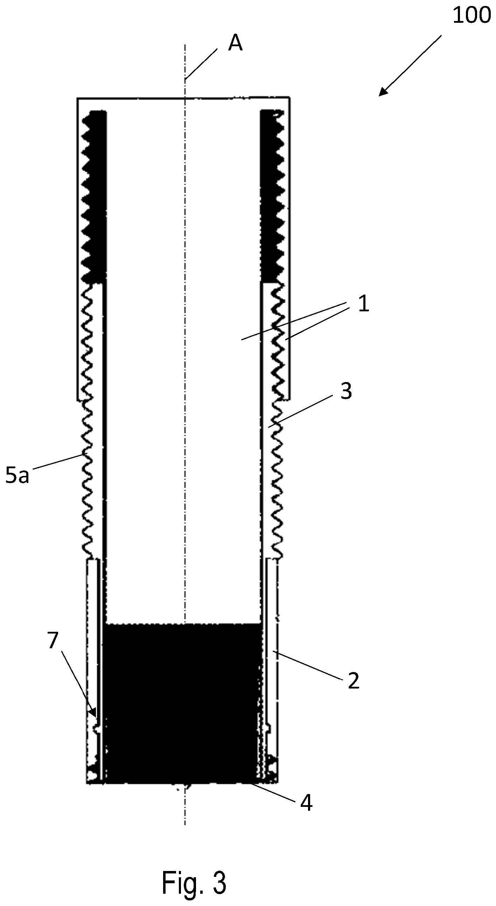

Die Arretierung 7 wird im Beispiel der Figuren 1 bis 3 dadurch gebildet, dass die Ladetrommel 3 an ihrer Außenwand eine ringförmige Auskragung 7a aufweist und die Mahleinheit 2 an ihrer Innenwand eine ringförmige Ausnehmung 7b, siehe insbesondere die Bezugszeichen in Figur 2. Wie aus Figur 3 ersichtlich ist, kann die ringförmige Auskragung 7a passgenau in der ringförmigen Ausnehmung 7b aufgenommen werden. Dadurch wird ein Abrutschen der Mahleinheit 2 nach unten verhindert und gleichzeitig ein Drehen der Mahleinheit 2 ermöglicht.

Wie oben erwähnt wird der Laderaum 6 von unten durch die Mahlscheibe 4 begrenzt. Die Mahlscheibe 4 weist Mahlklingen auf, die derart ausgerichtet sind, dass ein im Laderaum 6 befindliches Mahlgut bei Rotation der Mahlscheibe 4 gemahlen wird. Wird die Mahleinheit 2 bezüglich der Ladetrommel 3 gedreht, kann das Mahlgut somit gemahlen werden, auch wenn kein axialer Vorschub der Mahleinheit 2 zur Ladetrommel 3 gegeben ist. Die Mahlscheibe 4 kann optional aus der Mahleinheit 2 entnommen werden, indem die Mahleinheit 2 mit der Mahlscheibe 4 mittels eines Schnellverschlusses, der auch ein Gewinde sein kann, nicht dauerhaft verbunden ist.

Um den Zerkleinerer 100 der Figuren 1 bis 3 zusammenzusetzen, z.B. für eine erstmalige Verwendung des Zerkleinerers, wird die Mahleinheit 2 (an der die Mahlscheibe 4 bevorzugt schon montiert ist) von unten auf die Ladetrommel 3 aufgesteckt, bis diese einrastet. Hierunter kann beispielsweise verstanden werden, dass die ringförmige Auskragung 7a der Ladetrommel 3 in die ringförmige Ausnehmung 7b der Mahleinheit 2 einrastet. Als nächstes kann das Mahlgut in den Laderaum 6 der stehenden Ladetrommel 3 eingefüllt werden, insbesondere vom oberen Ende des Laderaums 6 in diesen eingebracht werden. Sobald die Befüllung abgeschlossen ist, kann der Pressstempel 1a der Presseinheit 1 in die Ladetrommel 3 eingeschoben werden und mittels Drehung so weit eingeschraubt werden, dass der Pressstempel 1a im Laderaum auf das Mahlgut drückt. Der Zerkleinerer 100 ist nun einsatzbereit.

Nun wird der Zerkleinerer 100 mit beiden Händen umfasst, wobei die linke Hand die Mahleinheit 2 greift und die rechte Hand den Pressstempel 1a bzw. die Presseinheit 1 greift (oder umgekehrt). Durch Drehen der linken Hand entgegen dem Uhrzeigersinn wird das Mahlgut an der Mahlscheibe 4 gerieben. Sobald zwischen Pressstempel 1a bzw. Presseinheit 1 und Mahlgut freier Raum entsteht, wirken Kräfte, welche mit der rechten Hand im Uhrzeigersinn anliegen und sorgen für weiteren Vortrieb des Pressstempels 1a in den Hohlraum der Ladetrommel 3. Dadurch wird gewährleistet, dass das Mahlgut immer mit ausreichend Druck und Volumen an die Mahlscheibe 4 herangeführt wird. Zur Zerkleinerung in andere Partikelgrößen kann die Mahlscheibe 4 von der Mahleinheit 2 getrennt und durch alternative Mahlscheiben 4 ausgetauscht werden. Dazu wird die Mahleinheit 2 von der Ladetrommel 3 abgezogen. Dazu ist es nötig. Die Arretierung 7 zu lösen, was beispielsweise durch festes Ziehen der Mahleinheit 2 in axialer Richtung erfolgen kann. Danach kann die Mahlscheibe 4 ausgetauscht und die Mahleinheit 2 wieder auf die Ladetrommel 3 aufgesteckt werden, bis diese einrastet.

Bei der Bedienung des Zerkleinerers 100 ist zu beachten, dass sowohl die Mahleinheit 2 bezüglicher der Ladetrommel 3 rotieren kann, als auch die Presseinheit 1 bezüglicher der Ladetrommel 3 rotieren kann. Eine Rotation der Mahleinheit 2 bezüglicher der Ladetrommel 3 wird hierin als Mahlfunktion bezeichnet und eine Rotation der Presseinheit 1 bezüglicher der Ladetrommel 3 wird als Vorschubfunktion bezeichnet. Wenn sich das Mahlgut im Laderaum 6 nicht mit ausreichend Druck vom Pressstempel 1a beaufschlagt wird, wird in der Regel die Vorschubfunktion aktiviert und wenn das Mahlgut mit ausreichend Druck vom Pressstempel 1a beaufschlagt wird, wird in der Regel die Mahlfunktion aktiviert.

Der Zerkleinerer 100 ermöglicht ein automatisches situationsabhängiges Aktivieren der Vorschubfunktion und der Mahlfunktion, wenn die Drehwiderstände der Mahleinheit 2 bezüglicher der Ladetrommel 3 bzw. der Presseinheit 1 bezüglicher der Ladetrommel 3 entsprechend eingestellt werden. Der Drehwiderstand der Mahleinheit 2 bezüglicher der Ladetrommel 3 kann beispielsweise durch eine entsprechende Ausgestaltung der Arretierung 7 eingestellt werden, sodass diese beispielsweise einen gewissen Reibungswiderstand ausübt, wenn die Mahleinheit 2 bezüglicher der Ladetrommel 3 gedreht wird. Der Drehwiderstand der Presseinheit 1 bezüglicher der Ladetrommel 3 kann beispielsweise durch eine entsprechende Ausgestaltung der Dichtung 9 eingestellt werden.

Die Vorschubfunktion kann aber auf Benutzerwunsch auch manuell aktiviert werden, indem die Mahleinheit 2 manuell bezüglich der Ladetrommel 3 arretiert wird. Gleichfalls könnte die Mahlfunktion manuell aktiviert werden, indem die Presseinheit 1 manuell bezüglich der Ladetrommel 3 arretiert wird.

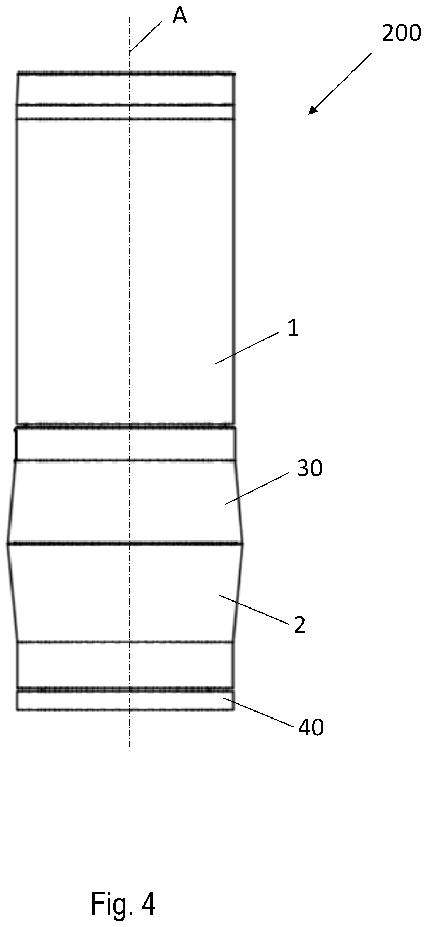

Die Figuren 4 bis 6 zeigen eine zweite Ausführungsform eines erfindungsgemäßen Zerkleinerers 200. Alle Ausführungsvarianten, die oben im Zusammenhang mit den Figuren 1 bis 3 für den Zerkleinerer 100 erläutert wurden, sind auch auf den Zerkleinerer 200 der Figuren 4 bis 6 anwendbar, sofern nichts anderes beschrieben wird. Insbesondere weist auch der Zerkleinerer 200 der Figuren 4 bis 6 eine Presseinheit 1, eine Mahleinheit 2 eine Ladetrommel 3 und eine Dichtung 9 auf, die wie in Bezug auf die Figuren 1 bis 3 erläutert zusammengesetzt werden können, sodass der Zerkleinerer 200 in einer Vorschubfunktion und in einer Mahlfunktion eingesetzt werden kann. Als zusätzliches Element weist der Zerkleinerer 200 eine Arretiersicherung 30 auf, deren Funktion weiter unten erläutert wird.

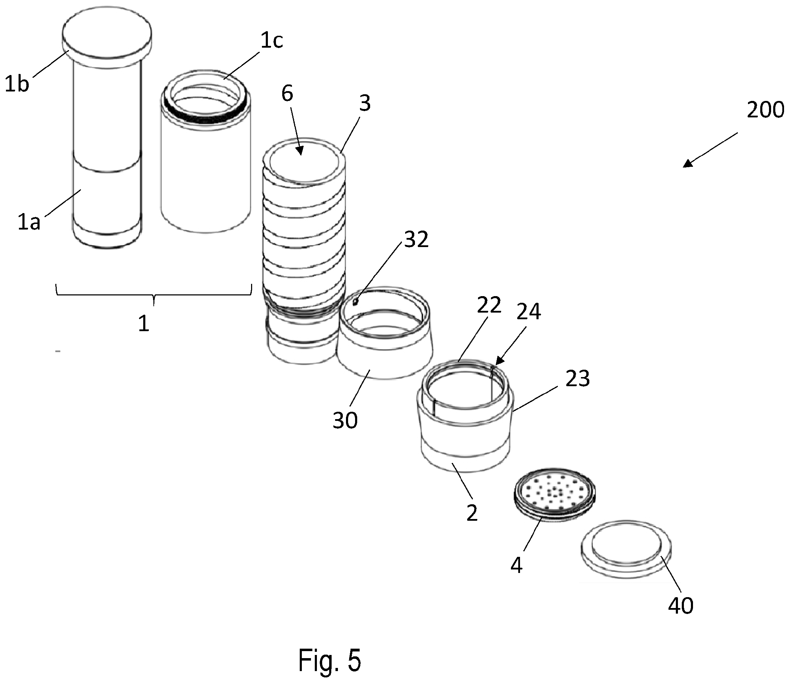

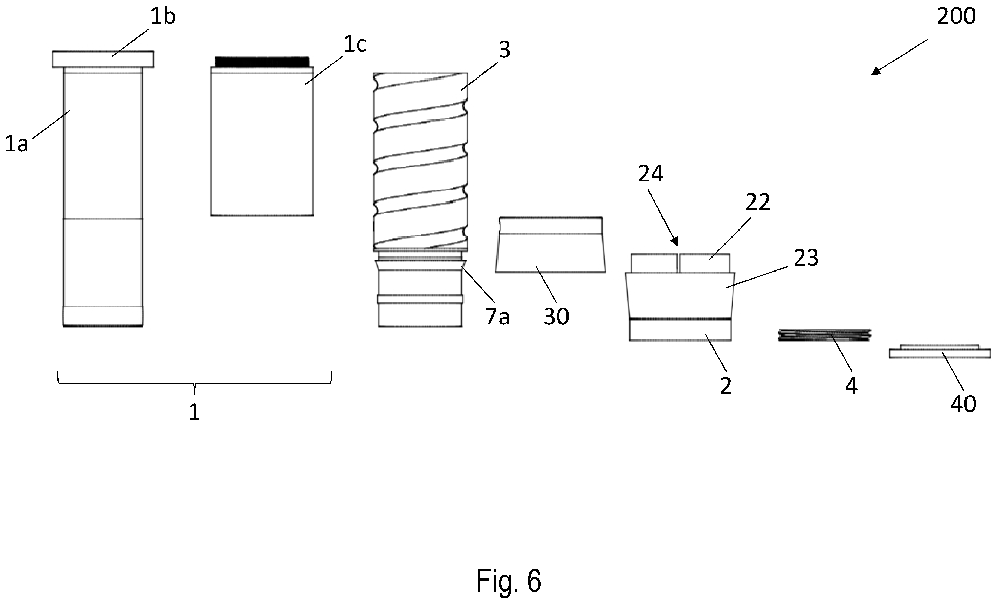

Aus den Figuren 5 und 6 ist ersichtlich, dass die Presseinheit 1 mehrstückig ausgeführt sein kann, um die Herstellung zu vereinfachen. Hier ist die Verbindungsscheibe 1b einstückig am Pressstempel 1a gefertigt. Die Hülse 1c ist gesondert gefertigt und nimmt die Form eines Rohres ein, die am oberen Ende ein Gewinde aufweist, das entsprechend mit der Verbindungsscheibe verbunden werden kann. Die Verbindungsscheibe 1b weist denselben Außendurchmesser wie die Hülse 1c auf, damit diese bündig aneinander anschließen können. Zwischen der Hülse 1c und dem Pressstempel 1a liegt ein Spalt vor, in den die Ladetrommel 3 eingeführt werden kann. Es versteht sich, dass diese Lösung auch auf die Variante der Figuren 1 bis 3 anwendbar ist und in allen Varianten auch die Verbindungsscheibe 1b gesondert vom Pressstempel 1a ausgeführt sein könnte. Alternativ könnten alle Bauteile einstückig gefertigt werden.

Die Ladetrommel 2 der Figuren 4 bis 6 ist im Wesentlichen gleich aufgebaut wie in den Figuren 1 bis 3, wobei das Gewinde anders ausgeführt ist. Es ist ersichtlich, dass die Steigung des Gewindes, aber auch eine Gangzahl des Gewindes je nach Anwendungsfall frei gewählt werden kann.

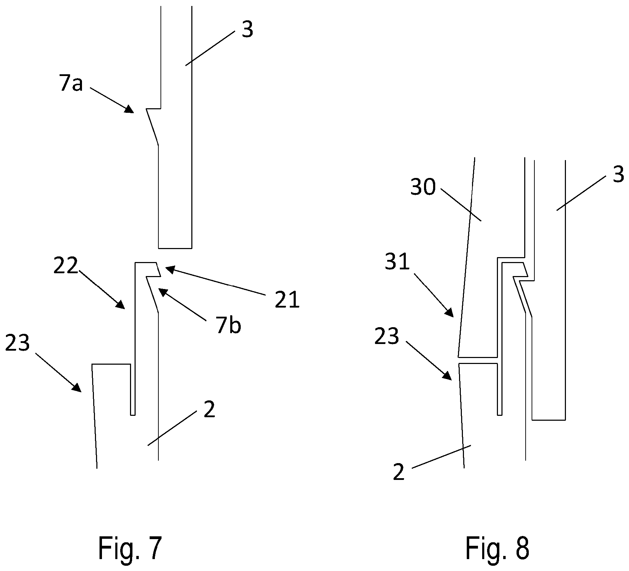

Die Arretierung 7 der Ausführungsform der Figuren 4 bis 6 ist im Detail aus den Figuren 7 und 8 ersichtlich. Die Arretierung 7 ist derart ausgeführt, dass die Auskragung 7a an der Ladetrommel 3 als Widerhaken ausgeführt ist. Der Widerhaken erweitert sich konisch nach außen, gesehen von unten nach oben. Die Mahleinheit 2 weist an der Innenseite am oberen Ende die Einkerbung 7b auf, welche gegengleich zur Form des Widerhakens ausgestaltet ist.

Aus Figur 7 ist ersichtlich, dass die Mahleinheit 2 an der oberen inneren Kante eine Fase 21 aufweist, sodass die Mahleinheit 2 leichter auf den Widerhaken aufgeschoben werden kann. Weiters ist ersichtlich, dass die Mahleinheit 2 an einem oberen Abschnitt 22 eine dünnere Wandstärke aufweist als am unteren Abschnitt und abschnittsweise auch doppelwandig ausgeführt sein kann, um die dünnere Wandstärke über einen längeren Bereich des oberen Abschnitts 22 zu erhalten. Bei einer abschnittsweise doppelwandigen Mahleinheit 2 wird der radial außerhalb des oberen Abschnitts 22 liegende Bereich der Mahleinheit 22 als Griffbereich 23 bezeichnet. Dadurch ist der obere Abschnitt 22 der Mahleinheit 2 flexibel und kann leichter nach außen gebogen werden. Wie aus den Figuren 5 und 6 ersichtlich ist, kann der obere Abschnitt 22 auch durch zwei in axialer Richtung verlaufende Durchbrechungen 24 in zwei Teile geteilt sein, wobei die Durchbrechungen 24 den oberen Abschnitt 22 in radialer Richtung durchsetzen. Dadurch kann der obere Abschnitt 22 der Mahleinheit 2 noch leichter nach außen gebogen werden.

Wird nun die Mahleinheit 2 von unten nach oben auf die Ladetrommel 3 aufgeschoben, drückt sich der obere Abschnitt 22 der Mahleinheit 2 aufgrund der Krafteinwirkung des Widerhakens nach außen, bis sich der Widerhaken in der Ausnehmung 7b befindet. Dieser Zustand ist in Figur 8 ersichtlich.

Damit sich der obere Abschnitt 22 der Mahleinheit 2 im Betrieb nicht nach hinten biegt und die Mahleinheit 2 unabsichtlich von der Ladetrommel 3 gelöst wird, kann die Arretiersicherung 30 eingesetzt werden, die durch eine ringförmige Schelle gebildet werden kann. Die Arretiersicherung 30 weist an ihrem unteren Ende innen eine Ausnehmung auf, in welcher der obere Abschnitt 22 der Mahleinheit 2 aufgenommen werden kann, wie aus Figur 8 ersichtlich ist. Dadurch kann ein unterer Bereich 31 der Arretiersicherung 30 in axialer Richtung unmittelbar über einem Griffbereich 23 der Mahleinheit 2 zu liegen kommen und bündig an diesen anschließen. Der obere Abschnitt der Mahleinheit 2 ist somit radial innerhalb der Arretiersicherung 30 aufgenommen und kann nicht nach außen gebogen werden.

Um den Zerkleinerer 200 mit Arretiersicherung 30 zusammenzusetzen, wird zuerst die Mahleinheit 2 von unten nach oben auf die Ladetrommel 3 geschoben, wobei sich der obere Abschnitt 22 der Mahleinheit 2 nach außen biegt, bis sich der Widerhaken in der Ausnehmung 7b befindet. Danach wird die Arretiersicherung 30 von oben nach unten auf die Ladetrommel 3 geschoben. Die Arretiersicherung 30 kann hierfür ein Innengewinde aufweisen, welches mit dem Gewinde 5b der Ladetrommel 3 zusammenwirkt, damit die Arretiersicherung 30 von oben nach unten auf die Ladetrommel 3 aufgedreht werden kann, bis sie unmittelbar über der Mahleinheit 2 zu liegen kommt und dabei den oberen Abschnitt 22 der Mahleinheit 2 umgreift und der Zustand von Figur 8 erreicht ist. In diesem Zustand kann die Arretiersicherung 30 drehfest mit der Ladetrommel 3 verbolzt werden, z.B. durch eine Arretieröffnung 32 in der Arretiersicherung 30, die aus Figur 5 ersichtlich ist. Danach kann die Presseinheit 1 von oben in die Ladetrommel 3 eingeführt werden, wie oben für die Figuren 1 bis 3 beschrieben wurde.

Aus den Figuren 4 bis 6 ist weiters ersichtlich, dass der Zerkleinerer 200 einen Deckel 40 aufweisen kann, mit welchem die untere Öffnung der Mahleinheit 2 verschließbar ist.

Weiters weist auch der Zerkleinerer 200 eine Dichtung 9 auf, die wie in den Figuren 1 und 3 dargestellt ausgeführt werden kann.

Die Erfindung kann auch wie folgt beschrieben werden: Ein Zerkleinerer für Lebensmittel welcher durch sich durch seine einfache Bauweise und Funktionalität definiert. Zur erstmaligen Verwendung wird die Mahleinheit (2) von unten auf die Ladetrommel (3) aufgesteckt bis diese einrastet. Als nächstes wird in den Laderaum (6) der stehenden Ladetrommel das Mahlgut eingefüllt. Sobald die Befüllung abgeschlossen ist, wird der Pressstempel (1) in die Ladetrommel (3) eingeschoben und mittels Drehung so weit eingeschraubt, dass der Pressstempel (1) im Laderaum (6) auf das Mahlgut drückt. Der Zerkleinerer ist nun einsatzbereit. Nun wird der Zerkleinerer mit beiden Händen umfasst, wobei die linke Hand die Mahleinheit (2) greift und die rechte Hand den Pressstempel (1) fasst. Durch Drehen der linken Hand entgegen dem Uhrzeigersinn wird das Mahlgut and der Mahlscheibe (4) gerieben. Sobald zwischen Pressstempel (1) und Mahlgut freier Raum entsteht, wirken die Kräfte, welche mit der rechten Hand im Uhrzeigersinn anliegen und sorgen für weiteren Vortrieb des Presstempels (1) in den Hohlraum der Ladetrommel (3). Dadurch wird gewährleistet, dass das Mahlgut immer mit ausreichend Druck und Volumen an die Mahlscheibe (4) herangeführt wird. Zur Zerkleinerung in andere Partikelgrößen kann die Mahlscheibe (4) von der Mahleinheit (2) getrennt und durch alternative Mahlscheiben ausgetauscht werden. Dazu wird die Mahleinheit (2) von der Ladetrommel (3) abgezogen. Dazu ist es nötig, die Arretierung (7) zu lösen. Danach kann die Mahlscheibe getauscht, sowie die Mahleinheit wieder auf die Ladetrommel aufgesteckt werden bis diese einrastet. Die Erfindung besteht aus einer Ladetrommel (3) welche im inneren Laderaum (6) Platz für Mahlgut bietet und an der äußeren Seite über ein Gewinde (5b) verfügt. Weiters verfügt der Zerkleinerer über einen Presstempel (1) welcher das Mahlgut vertikal an die Mahlscheibe (4) drückt und sich durch ein Gewinde (5a) welches in das Gewinde (5b) der Ladetrommel (3) greift mittels Drehbewegung nach unten drückt. Auf die Ladetrommel (3) aufgeschoben ist weiters eine Mahleinheit (2) welche aus einem Hohlzylinder besteht, der an der unteren Seite durch eine Mahlscheibe (4) begrenzt ist und an der oberen Seite geöffnet ist, sodass diese auf die Ladetrommel (3) aufgeschoben und mittels Arretierung (7) gegen Herausrutschen gesichert ist. Die Mahleinheit (2) ist mit der Mahlscheibe (4) mittels Schnellverschluss (8), das kann auch ein Gewinde sein, nicht dauerhaft verbunden wodurch verschiedene Mahlgrade mittels Wechsel der Mahlscheibe gewählt werden können. Die Funktionalität der Mühle ist derart gestaltet, dass durch gegengleiche Drehung vom Presstempel (1) und Mahleinheit (2) das Mahlgut an die Mahlscheibe (4) herangedrückt und an der Mahlscheibe (4) gerieben wird. Die Ausrichtung der Mahlklingen ist so gestaltet, dass diese ihre Funktion in gegenläufiger Drehrichtung zum Gewinde des Presstempels (5a) erreichen. Die Erfindung betrifft einen Zerkleinerer für Lebensmittel. Der Zerkleinerer umfasst eine Ladetrommel (3) mit einem inneren Laderaum (6) einem Gewinde (5b) an der Außenseite im oberen Bereich, eine Mahleinheit (2) bestehend aus einer Mahlscheibe (4)mit Reibeklingen und einem nach oben offenen Zylinder, die am unteren Ende der Ladetrommel (3) installiert ist, sowie einer Presseinheit (1), die im inneren Laderaum (6) der Ladetrommel (3) nach oben und unten beweglich und seitlich durch die Wand des Laderaumes (6) geführt ist und zum Komprimieren von Mahlgut in Richtung der Mahleinheit (2) verwendet wird, ausgeführt mit einer Hülse mit Gewinde zum Verriegeln der Presseinheit (1) verwendet wird, und eine Hülse, die in einer Hülsenform mit der Außenwand der Ladetrommel (3) über ein Gewinde verbunden ist und sich relativ zur Ladetrommel (3) dreht. Die Mahleinheit (2) ist nicht mit der Ladetrommel (3) verbunden jedoch mittels Arretierung (7) gegen ein Abrutschen nach unten gesichert ist. Die Mahleinheit (2) ist frei drehbar. Lebensmittel werden durch die Presseinheit (1) gegen die Mahlscheibe (4) gedrückt, um gemahlen zu werden. Der Zerkleinerer wird mit (Linkshänder Version vorbehalten) der linken Hand an der Mahleinheit (2) und mit der rechten Hand an der Hülse der Presseinheit (1) gefasst. Durch gegenläufige Drehung beider Hände, also rechte Hand im Uhrzeigersinn und linke Hand entgegen dem Uhrzeigersinn entsteht einerseits Vortrieb der Presseinheit (1) und Mahlwirkung der Mahlscheibe (4) auf das Mahlgut andererseits.

## Patentansprüche

1. Zerkleinerer (100, 200) für Lebensmittel, wobei der Zerkleinerer (100) eine Presseinheit (1), eine Mahleinheit (2) und eine Ladetrommel (3) umfasst,
wobei die Ladetrommel (3) einen inneren Laderaum (6) und im oberen Bereich ein Gewinde (5b) aufweist, über welches die Ladetrommel (3) mit der Presseinheit (1) verbunden ist, wobei die Mahleinheit (2) eine Mahlscheibe (4) mit Mahlklingen und einen nach oben offenen Zylinder aufweist, wobei die Mahleinheit (2) am unteren Ende der Ladetrommel (3) installiert ist,
wobei die Presseinheit (1) im inneren Laderaum (6) der Ladetrommel (3) nach oben und unten beweglich und seitlich durch eine Wand des Laderaums (6) geführt ist,
**dadurch gekennzeichnet, dass**
die Mahleinheit (2) mittels einer Arretierung (7) an der Ladetrommel (3) befestigt ist, in welcher die Mahleinheit (2) gegen ein Abrutschen nach unten gesichert und frei drehbar ist, wobei der Zerkleinerer (100, 200) ferner eine Dichtung (9) umfasst, welche dazu ausgebildet ist, einen Spalt zwischen der Innenwand der Ladetrommel (3) und dem Pressstempel (1a) abzudichten.

2. Zerkleinerer (100, 200) nach Anspruch 1, wobei die Ladetrommel (6) das Gewinde (5b) an einer Außenseite aufweist, und wobei die Presseinheit (1) einen Pressstempel (1a) und eine Hülse (1c) aufweist, wobei der Pressstempel (1a) in die Ladetrommel (3) eingeschobenen ist und die Hülse (1c) an ihrer Innenseite ein Gewinde (5a) aufweist, welches mit dem Gewinde (5b) an der Außenseite der Ladetrommel (3) verbunden ist.

3. Zerkleinerer (100, 200) nach Anspruch 2, wobei die Hülse (1c) einen Innendurchmesser aufweist, der größer als der Außendurchmesser des Presstempels (1a) ist, um die Ladetrommel (3) zwischen Hülse (1c) und Pressstempel (1a) aufzunehmen, wobei weiters am oberen Ende des Pressstempels (1) eine Verbindungsscheibe (1b) vorgesehen ist, welche denselben Außendurchmesser wie die Hülse (1c) aufweist und wobei die Hülse (1c), die Verbindungsscheibe (1b) und der Pressstempel (1a) starr miteinander verbunden sind.

4. Zerkleinerer (100, 200) nach einem der vorherstehenden Ansprüche, wobei die Arretierung (7) durch eine ringförmige Ausnehmung (7b) auf der Innenseite der Mahleinheit (2) und eine ringförmige Auskragung (7a) auf Außenseite der Ladetrommel (3) gebildet ist.

5. Zerkleinerer (100, 200) nach einem der Ansprüche 1 bis 3, wobei die Arretierung (7) durch eine ringförmige Auskragung (7a) auf der Innenseite der Mahleinheit (2) und eine ringförmige Ausnehmung (7b) auf der Außenseite der Ladetrommel (3) gebildet ist.

6. Zerkleinerer (200) nach Anspruch 4 oder 5, wobei die ringförmige Auskragung (7a) durch einen konischen Widerhaken gebildet.

7. Zerkleinerer (100, 200) nach einem der vorherstehenden Ansprüche, wobei die Mahlscheibe (4) auswechselbar in der Mahleinheit (2) vorgesehen ist, und bevorzugt durch eine andere Mahlscheibe (4) ausgewechselt werden kann.

8. Zerkleinerer (100, 200) nach einem der vorherstehenden Ansprüche, wobei die Mahlscheibe (4) Mahlklingen aufweist, welche derart ausgerichtet sind, dass diese ihre Funktionalität in gegenläufiger Drehrichtung zum Gewinde erreichen.

9. Zerkleinerer (100, 200) nach einem der vorherstehenden Ansprüche, ferner umfassend eine Arretiersicherung (30), welche drehfest an der Ladetrommel (3) montiert ist und in radialer Richtung unmittelbar über zumindest einem Abschnitt der Mahleinheit (2) liegt.

10. Zerkleinerer (100, 200) nach einem der vorherstehenden Ansprüche, wobei die Mahleinheit (2) einen oberen Abschnitt (22) aufweist, an welchem eine ringförmige Ausnehmung (7b) oder eine ringförmige Auskragung (7a) der Arretierung (7) vorliegt, wobei der obere Abschnitt (22) zumindest eine Durchbrechung (24), besonders bevorzugt genau zwei Durchbrechungen, aufweist.
